# EUROPEAN PATENT SPECIFICATION

(11) **EP 3 296 490 B1**
(45) Date of publication and mention of the grant of the patent: **09.12.2020**
(21) Application number: 16792716.9
(22) Date of filing: 11.05.2016
(51) Int. Cl.: E05B 85/12, B60J 5/04, E05B 77/36, E05B 15/04

(54) **INSIDE HANDLE DEVICE FOR VEHICLES**
INNENGRIFFVORRICHTUNG FÜR EIN FAHRZEUG
DISPOSITIF DE POIGNÉE INTÉRIEURE POUR VÉHICULES

(30) Priority: 11.05.2015 JP 2015096482
(43) Date of publication of application: 21.03.2018
(73) Proprietor: Alpha Corporation, Yokohama-shi, Kanagawa 236-0004 (JP)
(72) Inventor: Okuma Ryoya, Yokohama-shi Kanagawa 236-0004 (JP)
(74) Representative: Weickmann & Weickmann PartmbB
(86) International application number: PCT/JP2016/063993
(87) International publication number: WO 2016/181991

(56) References cited:
- GB-A- 2 304 145
- JP-A- 2001 349 102
- JP-A- 2011 094 436
- JP-U- S6 022 651
- US-A1- 2015 042 111

## Description

### Technical Field

The present disclosure relates to an inside handle device for a vehicle.

### Background Art

In the related art, as described in Patent Document 1, an inside handle device for a vehicle is formed by connecting an operating member (lock knob) and a handle (operating handle) to a case (handle base) to be capable of rotatably operating. The operating handle is urged to an initial rotation position side by a torsion spring of which one arm portion is engaged with the operating handle and the other arm portion is engaged with the handle base.

However, in the inside handle device for a vehicle of Patent Document 1, the arm portions of the torsion spring are configured to be engaged with the operating handle and the handle base in a sliding contact state to take a reaction force.

That is, in a case where the torsion spring is deformed in a winding direction to generate an urging force, a coil portion moves away from an engaged position or moves in a direction toward the engaged position. Therefore, when the operating handle is operated to rotate from the initial rotation position to an operation rotation position, the coil portion moves in the direction away from or toward the engaged position while sliding the arm portions with respect to the engaged positions.

When the coil portion moves, in a case where the coil portion is wound around a rotation shaft member of the operating handle, interference between the rotation shaft member and the coil portion occurs and in order to prevent occurrence of abnormal noise due to the interference, it is necessary to apply grease or the like, and there is a problem that assembling efficiency is lowered.

In addition, since the engaged position with respect to the arm portion is changed by the movement of the coil portion, a twisting angle of the coil portion with respect to an operation angle of the operating handle is different from an initial designed value, a predetermined torque cannot be obtained, and there is also a problem that an operation feeling deteriorates. Patent Documents 2, 3 and 4 each discloses a handle device. In Patent Document 2, a radial displacement of the coil portion of the torsion spring during operation of the operating handle is directly constrained by a coil restraining portion provided on the handle base.
In Patent Document 3, an undesired displacement of the torsion spring is reduced by providing a counterweight on the operating handle that penetrates the coil portion of the torsion spring.

### Prior Art Documents

### Patent Documents

[Patent Document 1] JP 2011094436 A
[Patent Document 2] US 2015/0042111 A1
[Patent Document 3] JP 2001349102 A
[Patent Document 4] GB 2304145 A

### Summary of the Invention

### Technical Problem

The present disclosure relates to an inside handle device for a vehicle that has good assembling efficiency and can obtain a good operation feeling.

### Solution to the Problem

According to the disclosure, there is provided an inside handle device for a vehicle including an operating handle 2 which is connected to a handle base 1 fixed to a door of a vehicle so as to be rotatably operable from an initial rotation position to an operation rotation position; and a torsion spring 6 in which one arm portion 4 extending from a coil portion 3 is engaged with an engaging portion 5 of the handle base 1 and in which the other arm portion 4 is engaged with an engaging portion 5 of the operating handle 2, so as to urge the operating handle 2 toward an initial rotation position side. The torsion spring 6 is mounted in a wound state so that the coil portion 3 is urged in a moving direction away from or toward an engaged position of the one arm portion 4 or an engaged position of the other arm portion 4 in an entire stroke from a set state corresponding to the initial rotation position of the operating handle 2 to an operation state corresponding to the operation rotation position of the operating handle 2. The one arm portion 4 or the other arm portion 4 is constrained in the moving direction of the coil portion 3 and is allowed to move in a direction opposite to the moving direction to be engaged with the corresponding engaging portion.

In the disclosure, in a case where a load is applied to the coil portion 3 of the torsion spring 6 from the set state in the winding direction by adding a force to the arm portion 4 of the torsion spring 6, it is known that a force is generated in the coil portion 3 in a direction away from a leading tip of the arm portion 4 in a case where two arm portions 4 are intersected and in a direction toward the leading tip of the arm portion 4 in a case where the two arm portions 4 are not intersected.

In the invention in which an intersecting state and a non-intersecting state between the arm portions 4 are constantly held in the entire stroke from an operation start to an operation end to the operating handle 2, and in this case, the movement of the coil portion 3 is regulated by constraint of the arm portion 4, since the coil portion 3 is not moved during the operation of the operating handle 2, it is possible to reliably prevent a problem associated with the movement of the coil portion 3.

In addition, the arm portion 4 is allowed to move in a direction opposite to the moving direction of the coil portion 3 during the operation of the torsion spring 6, it is possible to prevent deterioration of engagement workability of the arm portion 4 to the operating handle 2 or the engaging portion 5 of the handle base 1 as much as possible.

Here, in the inside handle device for a vehicle of the disclosure, an angle between the one arm portion and the other arm portion 4 in the initial rotation position may be set to be greater than a deflection angle in the operation state of the torsion spring 6. Each of the one arm portion 4 and the other arm portion 4 may be formed in a straight rod shape. A free end of the one arm portion 4 may abut against an abutting wall 7 formed in the handle base 1. A free end of the other arm portion 4 may abut against an abutting wall 7 formed in the operating handle 2.

In the disclosure, the torsion spring 6 is configured such that the arm portions 4 are maintained in the non-intersecting state during the operation of the operating handle 2, the free ends of the arm portions 4 abuts against the operating handle 2 and the abutting wall 7 formed in the handle base 1, and thereby the movement of the coil portion 3 is regulated.

Mounting workability of the work for mounting the torsion spring 6 by causing the free end of the arm portion 4 to abut against the abutting wall 7 is more effective than a case where the movement of the coil portion 3 is regulated by engaging the arm portion 4 with the operating handle 2 or the like.

Here, in the inside handle device for a vehicle of the disclosure, the engaging portion 5 of the handle base 1 may have an engaging wall 8 with which the one arm portion 4 is engaged as a back wall and the abutting wall 7 which is formed in the handle base 1 as a bottom wall, and the engaging portion of the handle base may have a pair of regulation walls 9, which protrudes from the engaging wall 8 and regulates the movement of the one arm portion 4 in a direction along the engaging wall 8, as a side wall and may be formed in a bottomed cylindrical shape having a U-shaped cross section which is opened in a winding direction.

In the disclosure, the engaging portion 5 is formed in the cylindrical shape having the U-shaped cross section having the engaging wall 8 and the pair of regulation walls 9, and in a state of being set in a predetermined position, the movement of the arm portion 4 to a side along the engaging wall 8 is regulated by the regulation wall 9. Therefore, the torsion spring 6 is prevented from falling down and a change in a spring constant due to the falling of the coil portion 3 is prevented.

In addition, the mounting of the torsion spring 6 can be completed only by pressing both the arm portions 4 against the bottom wall with the regulation wall 9 as a guide. The coil portion 3 and the arm portions 4 are elastically restored, are in a state of being engaged with the engaging portion 5, and then the mounting operation of the spring is completed after being temporarily elastically deformed and riding over the bottom wall by the operation.

Here, in the inside handle device for a vehicle of the disclosure, a pair of arm portions 4 extending from the coil portion 3 and including one arm portion 4 and the other arm portion 4 may be formed to have the same length. In the disclosure, since the torsion spring 6 can be mounted even in a reversed posture, it is possible to improve mounting workability.

According to the disclosure, it is possible to prevent misalignment of the torsion spring during the operation of the operating handle with a simple configuration.

### [Brief Description of Drawings]

Fig. 1 is a front view illustrating an inside handle device.
Fig. 2 is a sectional view that is taken along line 2A-2A of Fig. 1.
Fig. 3 is a sectional view that is taken along line 3A-3A of Fig. 1.
Fig. 4 is a sectional view that is taken along line 4A-4A of Fig. 1.
Fig. 5 is a sectional view that is taken along line 5A-5A of Fig. 1.
Fig. 6 is an explanatory perspective view illustrating a relationship between an operating handle and a torsion spring.

### Description of Embodiments

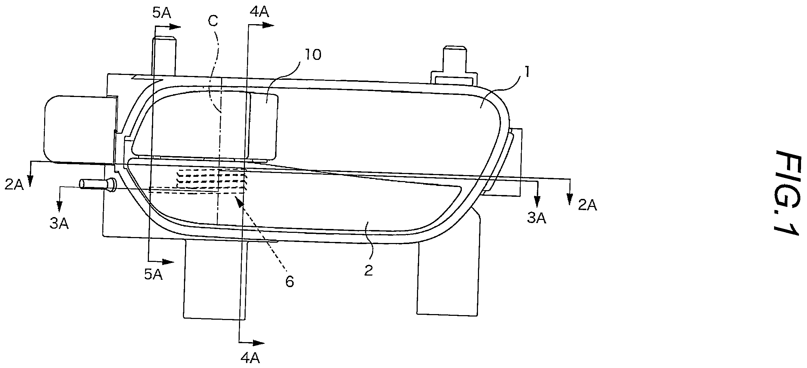

As illustrated in Figs. 1 to 6, an inside handle device is formed by connecting an operating handle 2 and a lock knob 10 to a handle base 1 so as to be rotatable around a rotation center (C), and is fixed to a door of a vehicle in the handle base 1.

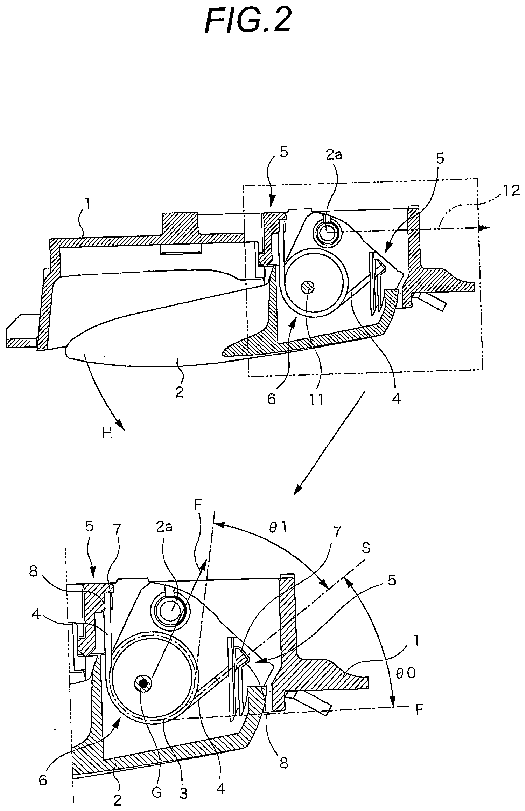

The operating handle 2 can be rotated from an initial rotation position illustrated in Fig. 2 to an operation rotation position rotated in a direction of an arrow (H) around a rotation shaft member 11 forming the rotation center (C). The operating handle 2 is operated to rotate to the operation rotation position and thereby a door locking device (not illustrated) within a door is operated via a transmission member 12 such as a cable device connected to a connecting portion 2a and a latch holding a closed state of the door is released.

In addition, the lock knob 10 is operated to be rotatable between a locked rotation position and an unlocked rotation position, and when the lock knob 10 is in the locked rotation, the door locking device connected to the lock knob 10 is in a locked state. Therefore, a latch releasing operation is prohibited by the operating handle 2 and the latch releasing operation is allowed by the operating handle 2 only when the lock knob 10 is in an unlocked state.

Moreover, in the example, a case where the connection of the operating handle 2 and the lock knob 10 to the handle base 1 is performed by using the rotation shaft member 11 installed on the handle base 1 is illustrated, but the connection of the operating handle 2 and the lock knob 10 to the handle base 1 can be performed, for example, by rotatably fitting the operating handle 2 and the lock knob 10 with a hinge projection formed in the handle base 1 without using the rotation shaft member 11.

A torsion spring 6 is mounted to urge the operating handle 2 in a direction of the initial rotation position to automatically return from the operation rotation position and to prevent rattling at the initial rotation position.

The torsion spring 6 is formed by extending straight rod-shaped arm portions 4 from both ends of a coil portion 3. The coil portion 3 is wound around the rotation shaft member 11 and the torsion spring 6 is mounted by engaging the arm portions 4 with engaging portions 5 formed in the operating handle 2 and the handle base 1 respectively.

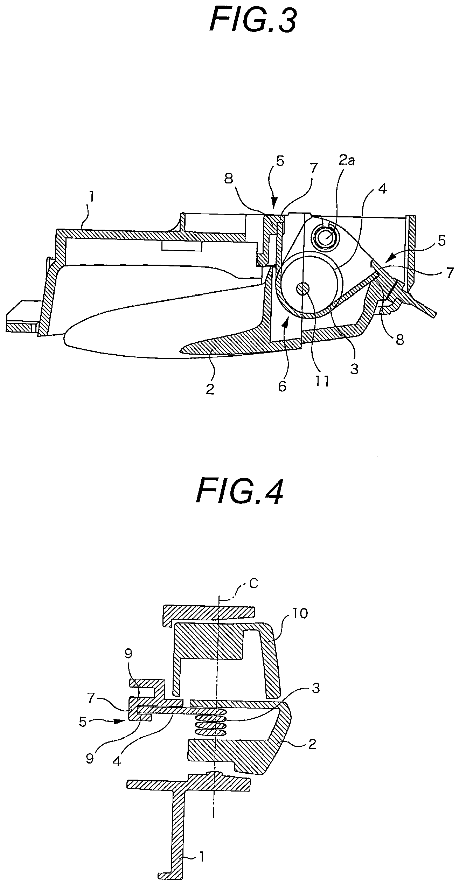

As illustrated in Figs. 2 and 3, each of the engaging portions 5 has an engaging wall 8 engaging with the arm portion 4 for applying a predetermined deflection angle to the coil portion 3 and is disposed at a position held in a deflected state (S state in Fig. 2) deflected by a deflection angle (θ0) from a free state (F state in Fig. 2) of no load.

In the example, two arm portions 4 are formed to have the same length and even when the torsion spring 6 is mounted in a reversed posture which is reversed with respect to a center line of the coil portion 3 in a width direction, a distance between a center of the coil portion 3 and a contact point of the arm portion 4 with an engaging wall 8 is considered to be unchanged.

In addition, each of the engaging portions 5 is provided with an abutting wall 7 that is a bottom wall in a case where an engaging wall 8 against which a free end of the arm portion 4 abuts in a mounting state is a back wall, and a pair of regulation walls 9 that is a side wall in a case where the engaging wall 8 is the back wall.

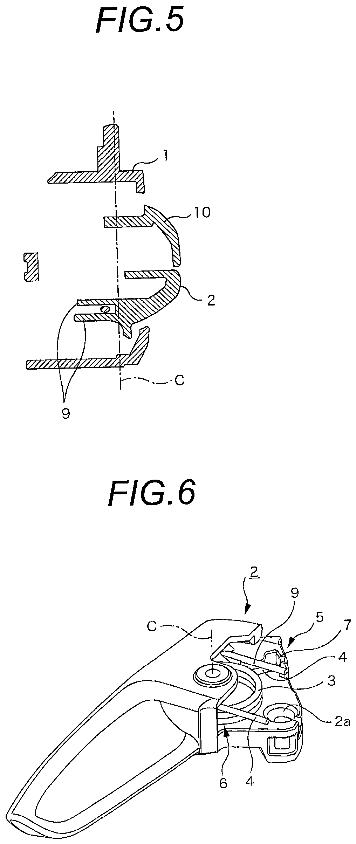

As illustrated in Fig. 4, the regulation wall 9 is formed as a wall surface on a handle base 1 side and, as illustrated in Fig. 6, one of the regulation walls 9 in the operating handle 2 is formed in a bar shape.

In addition, as illustrated in Fig. 4, an interval between the regulation walls 9 is formed to be slightly wider than a wire diameter of the arm portion 4 and the movement of the arm portion 4 in a direction along the engaging wall 8 is regulated in an engaged state between the regulation walls 9.

With the above configuration, the mounting of the torsion spring 6 is performed by pressing the arm portion 4 against an end surface of the abutting wall 7 in a state where the rotation shaft member 11 passes through the coil portion 3. The coil portion 3 is deformed in a winding direction by a pressing operation of the arm portion 4 due to a reaction force from the abutting wall 7 generated in the arm portion 4. As a result, after the arm portion 4 rides over the end surface of the abutting wall 7, the arm portion 4 is elastically fitted to the engaging portion 5 by an elastically restoring force of the coil portion 3.

As illustrated in Fig. 2, since two arm portions 4 are set to be in the non-intersecting state in which both the F state and the S state do not intersect with each other, a force in a direction of an arrow (F) in Fig. 2 is generated in the coil portion 3 in a state where the arm portion 4 is in pressed contact with the engaging wall 8. As a result, the free end of the arm portion 4 is in a state of being in pressed contact with the abutting wall 7 and the torsion spring 6 is held at the position.

Furthermore, the coil portion 3 of the torsion spring 6 is set such that even in a case where the operating handle 2 is operated to rotate to the operation rotation position and the deflection angle (θ1) is increased, the two arm portions 4 hold a non-intersecting posture. Therefore, a force in the direction of the continuous arrow (F) acts on the coil portion 3 and the torsion spring 6 is held at the initial position even by the rotational operation of the operating handle 2 to the operation rotation position.

This application is based on Japanese patent application JP 20150096482 A filed on May 11, 2015.

### Reference Signs List

- 1: handle base
- 2: operating handle
- 3: coil portion
- 4: arm portion
- 5: engaging portion
- 6: torsion spring
- 7: abutting wall
- 8: engaging wall
- 9: regulation wall

## Claims

1. An inside handle device for a vehicle comprising:
an operating handle (2) which is connected to a handle base (1) fixed to a door of a vehicle so as to be rotatably operable from an initial rotation position to an operation rotation position; and
a torsion spring (6) in which one arm portion (4) extending from a coil portion (3) is engaged with an engaging portion (5) of the handle base (1) and in which the other arm portion (4) is engaged with an engaging portion (5) of the operating handle (2), so as to urge the operating handle (2) toward an initial rotation position side,
wherein the torsion spring (6) is mounted in a wound state so that the coil portion (3) is urged in a moving direction away from or toward an engaged position of the one arm portion (4) or an engaged position of the other arm portion (4) in an entire stroke from a set state corresponding to the initial rotation position of the operating handle (2) to an operation state corresponding to the operation rotation position of the operating handle (2),
**characterized in that** the one arm portion (4) or the other arm portion (4) is constrained in the moving direction of the coil portion (3) and is allowed to move in a direction opposite to the moving direction to be engaged with the corresponding engaging portion (5).

2. The inside handle device for a vehicle according to claim 1,
wherein an angle between the one arm portion (4) and the other arm portion (4) in the initial rotation position is set to be greater than a deflection angle (θ1) in the operation state of the torsion spring (6),
wherein each of the one arm portion (4) and the other arm portion (4) is formed in a straight rod shape,
wherein a free end of the one arm portion (4) abuts against an abutting wall (7) formed in the handle base (1), and
wherein a free end of the other arm portion (4) abuts against an abutting wall (7) formed in the operating handle (2).

3. The inside handle device for a vehicle according to claim 2,
wherein the engaging portion (5) of the handle base (1) has an engaging wall (8) with which the one arm portion (4) is engaged as a back wall and the abutting wall (7) which is formed in the handle base (1) as a bottom wall, and
wherein the engaging portion (5) of the handle base (1) has a pair of regulation walls (9), which protrudes from the engaging wall (8) and regulates the movement of the one arm portion (4) in a direction along the engaging wall (8), as a side wall and is formed in a bottomed cylindrical shape having a U-shaped cross section which is opened in a winding direction.

4. The inside handle device for a vehicle according to claim 1, 2, or 3,
wherein a pair of arm portions (4) extending from the coil portion (3) and including one arm portion (4) and the other arm portion (4) is formed to have the same length.

## Patentansprüche

1. Innengriffvorrichtung für ein Fahrzeug, welche aufweist:
einen Bedienungsgriff (2), der mit einer an einer Tür eines Fahrzeugs befestigten Griffbasis (1) so verbunden ist, dass er von einer Anfangsdrehposition zu einer Betriebsdrehposition drehend bedienbar ist; und
eine Torsionsfeder (6), in der sich ein von einem Windungsabschnitt (3) erstreckender Armabschnitt (4) mit einem Eingriffsabschnitt (5) der Griffbasis (1) in Eingriff steht und in der der andere Armabschnitt (4) mit einem Eingriffsabschnitt (5) des Bedienungsgriffs (2) in Eingriff steht, um den Bedienungsgriff (2) zu einer Anfangsdrehposition-Seite zu spannen,
wobei die Torsionsfeder (6) in einem gewickelten Zustand angebracht ist, so dass, in einem Gesamthub von einem der Anfangsdrehposition des Bedienungsgriffs (2) entsprechenden Stellzustand zu einem der Betriebsdrehposition des Bedienungsgriffs (2) entsprechenden Betriebszustand, der Windungsabschnitt (3) in einer Bewegungsrichtung von einer Eingriffsposition des einen Armabschnitts (4) oder einer Eingriffsposition des anderen Armabschnitts (4) weg oder zu dieser hin gespannt wird,
**dadurch gekennzeichnet, dass** der eine Armabschnitt (4) oder der andere Armabschnitt (4) in der Bewegungsrichtung des Windungsabschnitts (3) eingeschränkt ist und ihm erlaubt ist, sich in einer Richtung entgegen der Bewegungsrichtung zu bewegen, um mit dem entsprechenden Eingriffsabschnitt (5) in Eingriff zu treten.

2. Die Innengriffvorrichtung für ein Fahrzeug nach Anspruch 1,
wobei ein Winkel zwischen dem einen Armabschnitt (4) und dem anderen Armabschnitt (4) in der Anfangsdrehposition so gesetzt ist, dass er größer ist als ein Auslenkwinkel (θ1) in dem Betriebszustand der Torsionsfeder (6), wobei jeder des einen Armabschnitts (4) und des anderen Armabschnitts (4) in einer geraden Stangenform ausgebildet ist,
wobei ein freies Ende des einen Armabschnitts (4) sich gegen eine in der Griffbasis (1) ausgebildete Stützwand (7) abstützt, und
wobei ein freies Ende des anderen Armabschnitts (4) sich gegen eine in dem Bedienungsgriff (2) ausgebildete Stützwand (7) abstützt.

3. Die Innengriffvorrichtung für ein Fahrzeug nach Anspruch 2, wobei der Eingriffsabschnitt (5) der Griffbasis (1) eine Eingriffswand (8), mit der der eine Armabschnitt (4) in Eingriff steht, als Rückwand aufweist, und die Stützwand (7), die in der Griffbasis (1) ausgebildet ist, als Bodenwand; und wobei der Eingriffsabschnitt (5) der Griffbasis (1) ein Paar von Regulierungswänden (9) aufweist, das von der Eingriffswand (8) vorsteht und die Bewegung des einen Armabschnitts (4) in einer Richtung entlang der Eingriffswand (8), als Seitenwand, reguliert, und mit einer unten geschlossenen Zylinderform mit U-förmigem Querschnitt ausgebildet ist, der sich in einer Wicklungsrichtung öffnet.

4. Die Innengriffvorrichtung für ein Fahrzeug nach Anspruch 1, 2 oder 3, wobei ein Paar von Armabschnitten (4), das sich von dem Windungsabschnitt (3) erstreckt und den einen Armabschnitt (4) und den anderen Armabschnitt (4) enthält, mit gleicher Länge ausgebildet ist.

## Revendications

1. Dispositif de poignée intérieure pour un véhicule comprenant :
une poignée d'actionnement (2) qui est reliée à une base de poignée (1) fixée à une portière d'un véhicule de manière à être actionnable en tournant depuis une position de rotation initiale à une position de rotation d'actionnement ; et
un ressort de torsion (6) dans lequel une portion de bras (4) s'étendant depuis une portion de bobine (3) est mise en prise avec une portion de mise en prise (5) de la base de poignée (1) et dans lequel l'autre portion de bras (4) est mise en prise avec une portion de mise en prise (5) de la poignée d'actionnement (2), de manière à pousser la poignée d'actionnement (2) vers un côté de position de rotation initiale,
dans lequel le ressort de torsion (6) est monté dans un état enroulé de sorte que la portion de bobine (3) soit poussée dans une direction de déplacement pour s'éloigner ou se rapprocher d'une position mise en prise de la portion de bras (4) ou d'une position mise en prise de l'autre portion de bras (4) dans une course complète depuis un état réglé correspondant à la position de rotation initiale de la poignée d'actionnement (2) jusqu'à un état d'actionnement correspondant à la position de rotation d'actionnement de la poignée d'actionnement (2),
**caractérisé en ce que** la portion de bras (4) ou l'autre portion de bras (4) est contrainte dans la direction de déplacement de la portion de bobine (3) et est autorisée à se déplacer dans une direction opposée à la direction de déplacement pour être mise en prise avec la portion de mise en prise (5) correspondante.

2. Dispositif de poignée intérieure pour un véhicule selon la revendication 1,
dans lequel un angle entre la portion de bras (4) et l'autre portion de bras (4) dans la position de rotation initiale est réglé pour être supérieur à un angle de déviation (θ1) dans l'état d'actionnement du ressort de torsion (6),
dans lequel chacune de la portion de bras (4) et de l'autre portion de bras (4) est formée dans une forme de tige droite,
dans lequel une extrémité libre de la portion de bras (4) vient en butée contre une paroi de butée (7) formée dans la base de poignée (1), et
dans lequel une extrémité libre de l'autre portion de bras (4) vient en butée contre une paroi de butée (7) formée dans la poignée d'actionnement (2).

3. Dispositif de poignée intérieure pour un véhicule selon la revendication 2,
dans lequel la portion de mise en prise (5) de la base de poignée (1) a une paroi de mise en prise (8) avec laquelle la portion de bras (4) est mise en prise en tant qu'une paroi arrière et la paroi de butée (7) qui est formée dans la base de poignée (1) en tant qu'une paroi de fond, et
dans lequel la portion de mise en prise (5) de la base de poignée (1) a une paire de parois de régulation (9), faisant saillie depuis la paroi de mise en prise (8) et régulant le déplacement de la portion de bras (4) dans une direction le long de la paroi de mise en prise (8), en tant qu'une paroi latérale et est formée dans une forme cylindrique pourvue d'un fond ayant une coupe transversale en forme de U qui est ouverte dans une direction d'enroulement.

4. Dispositif de poignée intérieure pour un véhicule selon la revendication 1, 2, ou 3, dans lequel une paire de portions de bras (4) s'étendant depuis la portion de bobine (3) et incluant une portion de bras (4) et l'autre portion de bras (4) est formée pour avoir la même longueur.
